# FASCICULE DE BREVET EUROPEEN

(11) **EP 0 782 150 B1**
(45) Date de publication et mention de la délivrance du brevet: **08.09.1999**
(21) Numéro de dépôt: 96402868.2
(22) Date de dépôt: 23.12.1996
(51) Int. Cl.: G21C 7/117

(54) **Grappe de commande pour réacteur nucléaire, à crayons démontables**
Mit abnehmbaren Stäben versehenes Kernreaktorsteuerstabbündel
Rod control cluster for nuclear reactor, the rods being removable

(30) Priorité: 26.12.1995 FR 9515488
(43) Date de publication de la demande: 02.07.1997
(73) Titulaire: FRAMATOME, 92400 Courbevoie (FR); COMPAGNIE GENERALE DES MATIERES NUCLEAIRES, 78140 Velizy Villacoublay (FR)
(72) Inventeur: Bonnamour, Michel, 69008 Lyon (FR); Burfin, Pascal, 69290 Saint-Genis-Les-Ollieres (FR)
(74) Mandataire: Fort, Jacques

(56) Documents cités:
- EP-A- 0 158 812
- EP-A- 0 159 509
- EP-A- 0 249 544

## Description

La présente invention concerne les grappes de commande pour réacteur nucléaire comprenant une araignée constituée d'un pommeau muni de moyens d'accrochage à une tige de commande et des ailettes rayonnant à partir d'une partie inférieure du pommeau et munies de doigts verticaux parallèles, répartis selon un réseau régulier, et des crayons munis de bouchons fixés de façon démontable aux doigts.

On utilise notamment à l'heure actuelle de telles grappes de commande comportant seize ailettes. Toutes les ailettes portent un doigt à leur extrémité. Une ailette sur deux comporte également un doigt intermédiaire. Ainsi la grappe comporte 24 crayons absorbants.

Les araignées sont actuellement fabriquées par mécano-soudage. Les ailettes sont rapportées autour du pommeau et brasées. L'opération de brasage est longue et délicate pour éviter toute erreur dans le positionnement des crayons et pour éviter les déformations dues aux effets thermiques.

Dans la plupart des cas, les doigts sont fixés sur les ailettes par une liaison à tenon et mortaise : la partie terminale de l'ailette constitue un tenon qui s'engage dans une fente du doigt. Cette liaison est complétée par un brasage. Lorsque cette solution est adoptée, il est impossible de ménager un trou vertical traversant dans le doigt et en conséquence les bouchons des crayons doivent être fixés dans des trous borgnes de la partie des doigts qui est au-dessous des niveaux des ailettes. Cette solution s'est révélée peu satisfaisante. Le document FR-A-2 599 884 (demande de brevet FR No. 86 08381) décrit une solution qui permet de rendre les crayons démontables. Elle est complexe et donne à l'ensemble du crayon une liaison d'encastrement avec l'araignée. Cette liaison est de nature à gêner le coulissement des crayons dans les tubes guides d'un assemblage destiné à recevoir la grappe.

La présente invention vise à fournir une grappe de commande répondant mieux que celles antérieurement connues aux exigences de la pratique. Suivant un aspect important de l'invention, elle propose dans ce but une grappe de commande dont les ailettes, leurs doigts, et la partie inférieure du pommeau constituent une pièce monobloc venant de moulage ou électro-usinée.

La partie supérieure peut être d'une seule pièce avec la partie inférieure, ce qui exigera en général une fabrication par électro-érosion.

Dans un mode avantageux de réalisation, la partie supérieure, constituée par un simple manchon cylindrique, est constituée séparément de la pièce monobloc, emboîtée dans la partie inférieure et raccordé à cette dernière, par exemple par une liaison filetée ou par un soudage.

Cette dernière conception permet de simplifier notablement la constitution et le montage de l'amortisseur qui est généralement prévu dans l'araignée pour réduire le choc subi par l'embout supérieur de l'assemblage combustible qui reçoit la grappe, lors d'un lâcher de cette dernière pour un arrêt d'urgence. Classiquement, l'amortisseur comporte une douille coulissant dans le pommeau et repoussée vers le bas, vers une position où elle fait saillie hors du pommeau, par un ressort. La position en saillie de la douille est définie par une butée constituée par la tête d'une vis placée axialement dans le pommeau. Cette constitution oblige à un réglage initial de la vis. De plus, la présence de la vis empêche l'écoulement de fluide réfrigérant le long du pommeau et allonge le temps nécessaire à la chute de la grappe, par un effet de dash-pot.

Dans le cas d'une constitution en deux pièces du manchon, il est possible de prévoir, dans la partie inférieure, une collerette interne située à un emplacement approprié et constituant la butée définissant la position en saillie de la douille.

Au surplus, il est avantageux de prévoir, dans une collerette interne du manchon sur laquelle s'appuie le ressort, un trou permettant un écoulement de fluide réfrigérant à travers la douille et le manchon, ce qui réduit l'effet de dash-pot.

Un autre but de l'invention, pouvant être atteint que l'on utilise ou non certaines des dispositions précédentes, est de laisser aux crayons une latitude de "flottement" leur permettant de s'adapter à l'emplacement exact des tubes guides destinés à recevoir dans les assemblages et/ou des fourreaux de guidage dans lesquels se logent les grappes lorsqu'elles sont remontées dans les internes supérieurs d'un réacteur, en cas de défaut d'alignement dû aux tolérances de fabrication.

Dans ce but, l'invention propose une grappe dont les bouchons comportent, entre les crayons et les moyens de fixation aux doigts, un prolongement ayant au moins une partie de diamètre réduit pour augmenter sa flexibilité.

Du fait de la constitution monobloc des doigts et des ailettes, des trous traversants peuvent être ménagés dans les doigts et autoriser une fixation aisément démontable, pour remplacement de certains crayons.

Enfin, il faut relever que le caractère "flottant" du montage des crayons présente un intérêt même dans le cas où l'araignée n'a pas la constitution définie plus haut et a par exemple celle qui fait l'objet du document FR-A-2 599 884 déjà mentionné.

Les caractéristiques ci-dessus ainsi que d'autres apparaîtront mieux à la lecture de la description qui suit de modes particuliers de réalisation de l'invention, donnés à titre d'exemples non limitatif, et de la comparaison qui en est faite avec les dispositions suivant l'art antérieur. La description se réfère aux dessins qui l'accompagnent, dans lesquels :
- la figure 1 est une vue en élévation et en coupe partielle d'une grappe d'un type utilisé à l'heure actuelle ;
- la figure 2 est une vue en perspective d'une araignée de grappe suivant l'art antérieur, montrant la liaison des doigts avec les ailettes ;
- la figure 3 est une vue à grande échelle, en coupe suivant un plan vertical, montrant un mode de fixation de crayons sur un doigt utilisé à l'heure actuelle ;
- la figure 4 est une vue en perspective d'une araignée de grappe monobloc, conforme à un premier mode de réalisation de l'invention ;
- la figure 5 est une vue en coupe suivant un plan vertical montrant une constitution possible d'amortisseur dans une araignée du genre montré en figure 4 ;
- la figure 6, similaire à la figure 4, montre un autre mode de réalisation de l'invention, dans laquelle l'araignée est en deux pièces ;
- la figure 7, similaire à la figure 6, montre une autre araignée en deux pièces et une constitution possible d'amortisseur utilisable dans une araignée en deux pièces ;
- les figures 7A, 7B et 7C, similaires à la figure 7, montrent des variantes de réalisation ;
- la figure 8 est une vue en coupe verticale montrant un mode possible de montage des crayons, leur donnant un caractère "flottant" ;
- les figures 9 et 10 similaires à la figure 8, montrent des variantes de réalisation ;
- la figure 11 est une vue en coupe suivant la ligne XI-XI de la figure 10 ;
- la figure 12, similaire à la figure 8, montre une autre variante encore ;
- la figure 12A montre une variante de réalisation de la figure 12 ;
- la figure 13 est une vue d'ensemble en élévation destinée à montrer une répartition possible de pions de blocage en rotation sur l'araignée ; et
- la figure 14 est une vue de dessus de la figure 13.

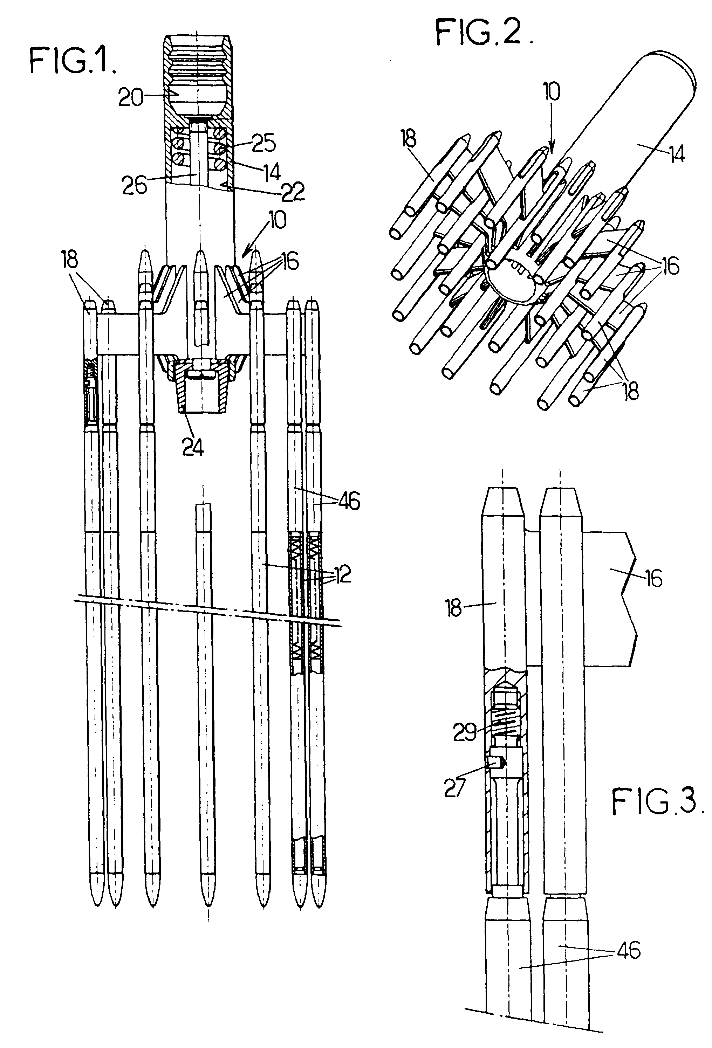

La grappe de commande montrée en figure 1 comporte une araignée 10 à laquelle sont suspendus vingt-quatre crayons 12. L'araignée peut être regardée comme comportant un pommeau 14 auquel sont fixées de façon rayonnante seize ailettes 16 portant des doigts 18 dans lesquels sont fixés les bouchons d'extrémité supérieure des crayons absorbants 12. Les doigts 18 débordent largement des ailettes vers le bas.

Dans le pommeau 14 est ménagé un chambrage 20 présentant des gorges de réception d'un dispositif (non représenté) de liaison avec la tige de commande permettant de déplacer verticalement la grappe. A la partie inférieure du pommeau est ménagé un alésage 22 de réception d'un amortisseur. Ce dernier se compose d'une douille 24 et d'un ressort 25 qui s'appuie sur une cloison interne séparant l'alésage du chambrage. Une vis 26 dont la position est ajustée par vissage dans un taraudage ménagé dans la cloison fixe la position de repos de la douille 24, dans laquelle elle fait saillie vers le bas à partir du pommeau. Après ajustage, la vis est immobilisée par soudage au fond du chambrage 20.

Classiquement les ailettes sont fixées au pommeau par brasage. Dans le cas de la figure 2, les doigts 18 sont fixés sur les ailettes par un assemblage à tenon et mortaise et par brasage. La partie terminale (ou la partie intermédiaire pour les doigts internes) constitue un tenon qui s'engage dans une fente du doigt constituant mortaise.

Dans la plupart des réalisations actuelles, chaque doigt est percé d'un trou borgne taraudé de fixation du bouchon 46 d'un crayon 12. Ce trou borgne ne peut pas dépasser l'arête inférieure des ailettes, du fait de l'assemblage à tenon et mortaise.

La figure 3 montre un mode possible de fixation d'un crayon dans le trou borgne fileté d'un doigt 18. Un prolongement du bouchon se termine par un tronçon fileté 29, vissé dans une portion taraudée du trou. Entre le tronçon fileté et le bouchon proprement dit 46 est prévue une partie de diamètre réduit, située entre deux bossages. Une goupille ou un pion 27 bloque la liaison.

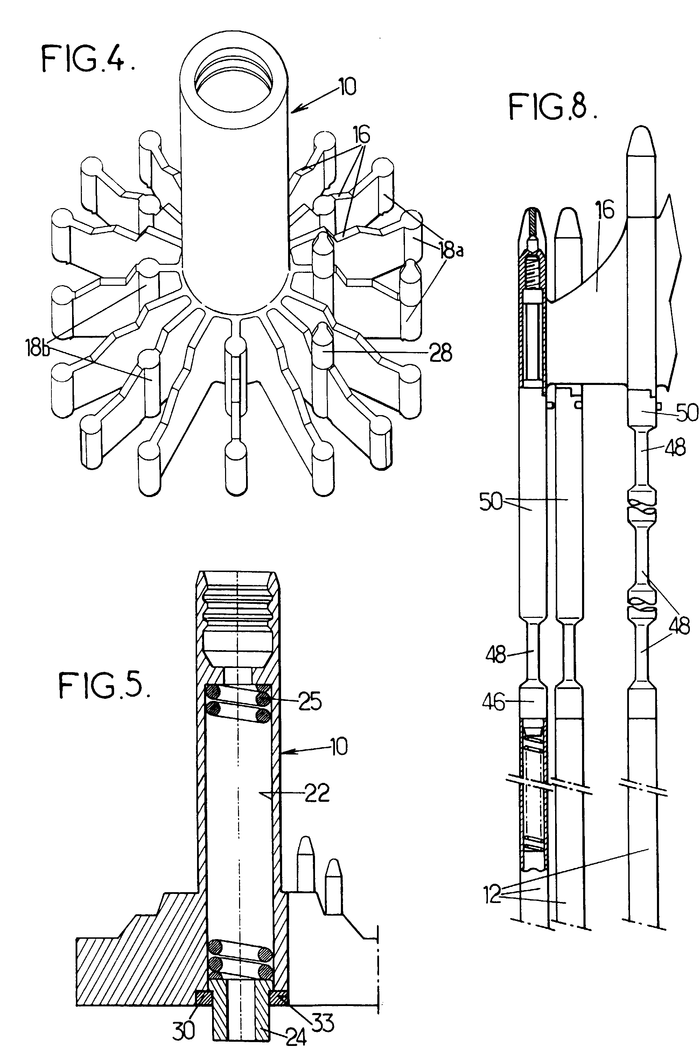

La figure 4 montre la constitution de l'araignée suivant un premier mode de réalisation de l'invention. L'araignée est constituée en une seule pièce, directement moulée ou par électro-érosion. Pour faciliter la réalisation par moulage, les arêtes des ailettes sont constituées par des parties plates parallèles les unes aux autres, constituant des marches, reliées par des parties plates obliques. Les doigts d'extrémité 18a ont une hauteur correspondant exactement à la partie des ailettes 16 éloignée de l'axe du pommeau. Les doigts intermédiaires 18b ont la même hauteur que la partie des ailettes plus proche de l'axe du pommeau. La figure 4 ne montre pas les alésages ménagés le long de l'axe des doigts, mais seulement quelques uns des écrous 28 en forme d'ogive destinés à fixer des bouchons de crayons.

L'araignée montrée en figure 4 peut recevoir un amortisseur du même genre que celui montré en figure 1.

Toutefois, il est avantageux, du point de vue de la facilité de fabrication et de montage, d'adopter la disposition montrée en figure 5, où les organes correspondant à ceux de la figure 1 portent le même numéro de référence. La position de repos prise par la douille 24 sous l'action du ressort 25 est fixée par son appui contre une rondelle 30 montée dans un chambrage terminal 33 de l'alésage 22 et soudée. La douille 24 comporte un épaulement lui permettant de venir s'appuyer contre la partie interne de la face supérieure de la rondelle 30.

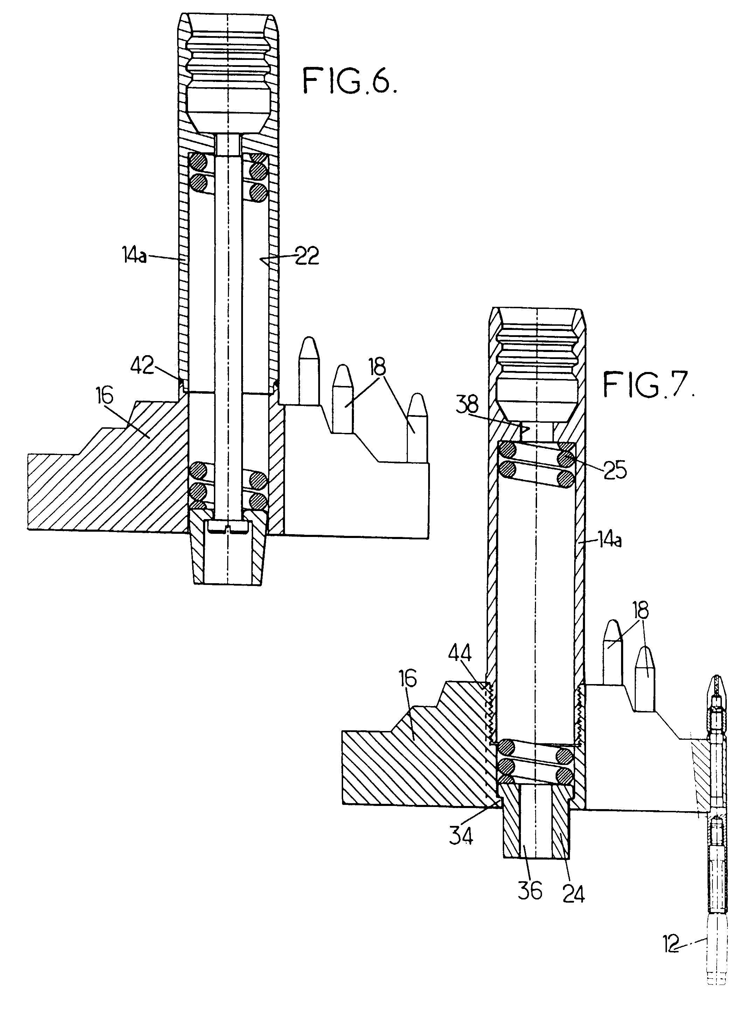

Dans le mode de réalisation illustré en figure 6, l'araignée est en deux pièces. Elle comporte d'une part une pièce tubulaire ou manchon 14a formant la partie supérieure du pommeau et d'autre part une pièce inférieure monobloc regroupant la partie inférieure du pommeau, les ailettes 16 et les doigts 18.

Le manchon 14a est usiné. La partie inférieure, qui comporte la partie inférieure du pommeau, les ailettes et les doigts, est obtenue par moulage d'une pièce massive ou par électro-érosion. La liaison entre la partie supérieure 14a et la partie inférieure peut s'effectuer de diverses façons. Dans le cas illustré sur la figure 6, un embrèvement cylindrique est usiné à l'extrémité supérieure de la partie inférieure. L'extrémité basse de la partie supérieure 14a est décolletée et s'emboîte dans la partie inférieure. Une soudure circulaire 42 permet de solidariser les deux parties de l'araignée. Les alésages 22 ménagés dans les deux parties ont le même diamètre, de façon à éviter toute discontinuité de l'alésage.

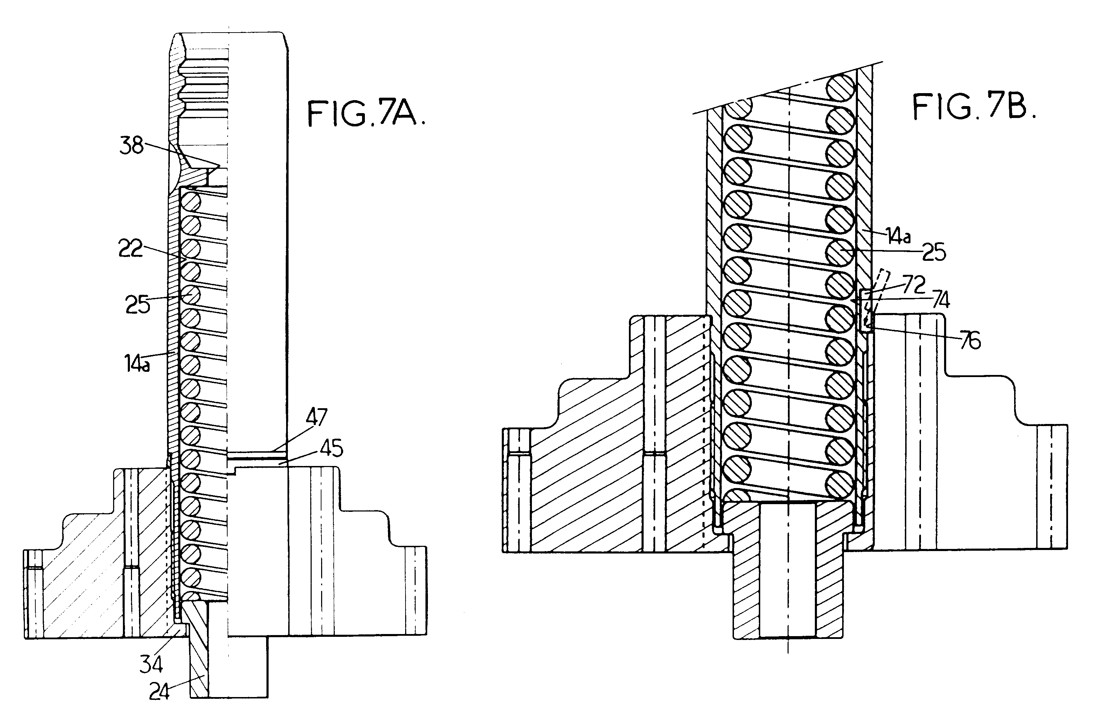

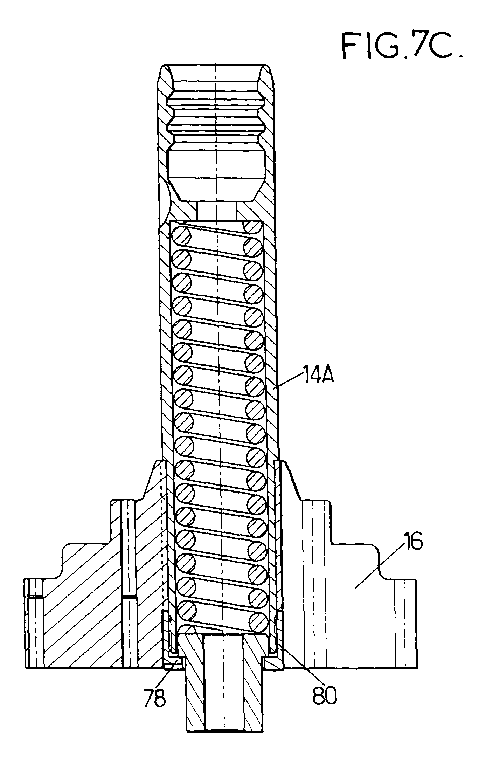

Dans la variante de réalisation montré en figure 7, la liaison entre l'extrémité basse de la partie supérieure au manchon et la partie inférieure est vissée. Pour cela la partie haute de la fraction de l'alésage de la partie inférieure située autour de la partie inférieure du manchon 14A est taraudée et cette partie du manchon est filetée. Ainsi, les deux parties constitutives de l'araignée peuvent être fixées l'une à l'autre par vissage jusqu'à ce qu'un épaulement 44 de la partie supérieure vienne s'appuyer contre l'arête supérieure des ailettes.

Les constitutions d'araignée des figures 6 et 7 permettent de monter l'amortisseur sans élément additionnel de retenue de la douille 24. Il suffit en effet de ménager, à l'extrémité inférieure de l'alésage de la partie inférieure, un talon 34 contre lequel vient s'appuyer un épaulement ménagé sur la douille 24. La douille 24 et le ressort 25 sont placés avant assemblage du manchon et de la partie inférieure (figure 7).

Cette constitution de l'amortisseur permet de ménager un conduit de circulation de fluide réfrigérant à travers l'araignée. En effet, aucune vis n'est nécessaire. Le réfrigérant peut s'écouler à travers un canal interne 36 dans la douille et un trou central 38 de la collerette contre laquelle s'appuie le ressort 25. Aucun ajustage et soudage d'une vis n'est plus nécessaire.

La constitution montrée en figure 7A se différencie essentiellement de celle de la figure 7 par la présence d'une bague 45 de retenue en rotation, destinée à empêcher le dévissage de la liaison filetée entre la partie inférieure et l'extrémité basse de la partie supérieure. La bague 45, en appui contre un épaulement de la partie supérieure, présente un ou deux tenons qui s'engagent dans une encoche de la partie inférieure. Une fois la partie supérieure vissée à fond, la bague en est solidarisée par quelques points de soudure en 47.

La variante de la figure 7B se différencie de celle de la figure 7A par le remplacement de la bague 45 par une clavette 72 placée dans un logement 74 de la partie supérieure et débordant dans une encoche 76 de la partie inférieure. Les pièces sont vissées l'une dans l'autre en veillant à mettre en face le logement 74 et l'encoche 76. La clavette, avantageusement à extrémités semi-cylindriques, est glissée en place comme indiqué par la flèche. Elle est ensuite bloquée à la pièce supérieure par une soudure le long de son arête supérieure.

Dans le cas de la figure 7C, l'alésage lisse de la partie inférieure présente un chambrage inférieur de réception d'un écrou 78 destiné à se visser sur la partie terminale filetée du manchon 14A. L'écrou, une fois vissé à fond, peut être bloqué par quelques points 80 de soudage par transparence, entre deux ailettes.

Les crayons peuvent être fixés sur les araignées montrées en figures 4, 6 et 7-7C par des moyens du genre décrit dans le document FR-A-2 599 884 déjà mentionné.

Toutefois il est préférable d'adopter une des dispositions qui seront maintenant décrites et donnent à la grappe de crayons une flexibilité facilitant l'insertion dans les tubes guides d'un assemblage ou des fourreaux de guidage des internes supérieurs.

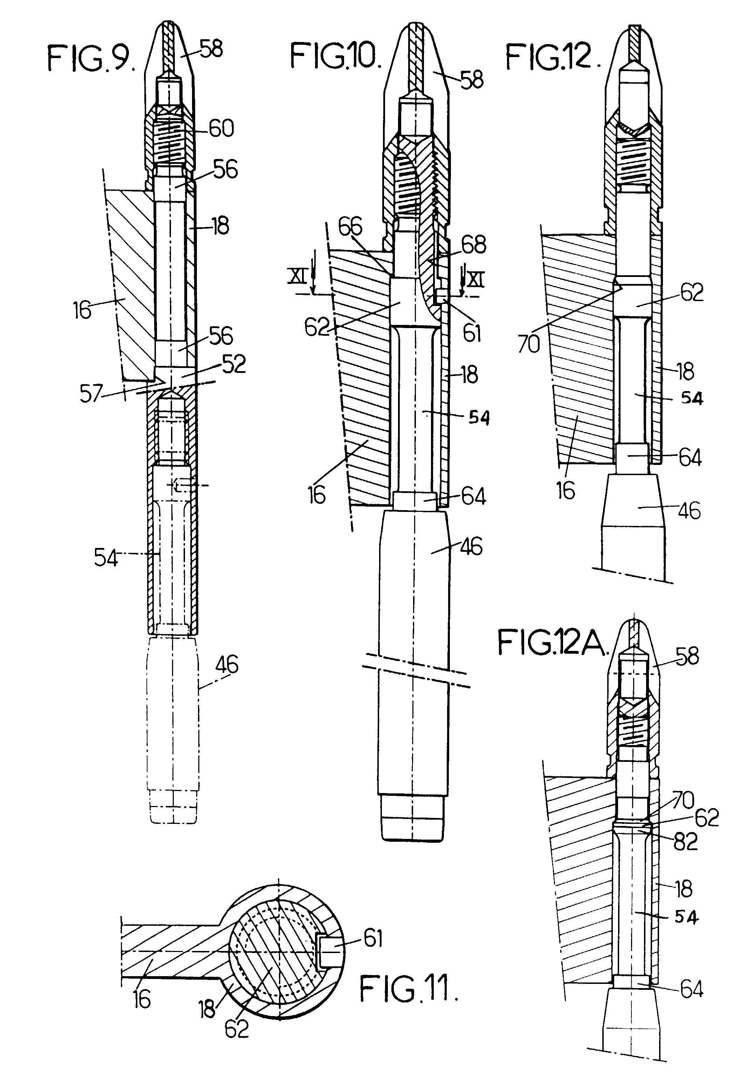

Dans le cas illustré en figure 8, chaque crayon 12 comporte un bouchon 46 muni d'un prolongement ayant une ou plusieurs portions 48 de section réduite, et des arrondis de raccordement avec les portions adjacentes de diamètre nominal pour éviter les amorces de rupture. Il peut y avoir jusqu'à trois portions de section réduite, généralement cylindriques. La partie terminale 50 du prolongement peut encore être fixée au doigt respectif par des moyens du genre décrit dans le document FR déjà cité.

Dans la variante montrée en figure 9, les moyens de fixation comprennent encore un prolongement du bouchon 46. Le prolongement présente une partie 54 de diamètre réduit placé entre deux renflements. Il est fixé dans un prolongateur 52. Ce prolongateur 52 comporte deux portées cylindriques 56 encadrant un tronçon de diamètre réduit. Seules les portées s'appuient contre la paroi d'un alésage débouchant, ménagé dans le doigt 18. Un lamage 57 de l'alésage reçoit un méplat du prolongateur 52 pour empêcher le prolongateur de tourner.

La portée supérieure 56 dépasse le niveau du doigt et guide un écrou-capuchon 58 vissé sur la partie terminale filetée 60 du prolongateur. Le serrage de l'écrou-capuchon applique un épaulement du prolongateur 52 contre la tranche inférieure du doigt.

Une fois l'écrou complètement enfoncé, il peut être bloqué en rotation par déformation d'une virole mince, du genre décrit dans le document FR-A-2 599 884.

Dans la variante montrée en figures 10 et 11, le bouchon 46 du crayon est fixé sur le doigt 18 par un prolongement ayant une constitution telle que le crayon soit légèrement flottant. Le prolongement présente une portion terminale filetée de réception d'un capuchon similaire à celui de la figure 9. Une goupille ou pion 61 empêche le bouchon de tourner. Une rainure 68 peut être ménagée dans le prolongement pour permettre de l'engager alors que la goupille est en place. Le prolongement présente encore une partie de section réduite 54 située dans le trou du doigt et comprise entre deux bossages 62 et 64. Le bossage supérieur 62 est monté à frottement doux dans le trou et a une fonction de centrage. Le bossage inférieur a un diamètre légèrement inférieur à celui du trou pour autoriser un léger débattement latéral du crayon.

Un épaulement interne 66 peut être prévu dans le trou de réception du prolongement pour constituer un appui de la face supérieure du bossage 62.

Le mode de réalisation montré en figure 12 se différencie de celui de la figure 10 essentiellement en ce que le bossage 62 se raccorde à une portion de diamètre plus faible par une zone tronconique 70 coopérant avec une partie correspondante du trou pour retenir le crayon en translation. Le blocage du crayon en rotation lors du montage ou du démontage est assuré par un outillage non représenté. Une portion de section réduite et/ou un jeu du renflement inférieur donnent encore un débattement au crayon.

La variante de réalisation montrée en figure 12A est prévue pour assurer un bon centrage du prolongateur du crayon dans le doigt 18 et en même temps écarter le risque de coincement par inclinaison lors du montage ou du démontage, le bossage 62 a une partie cylindrique très courte (inférieure au millimètre) prolongée vers le haut par la zone tronconique d'appui 70, ayant un angle au sommet d'environ 110°, et vers le bas par une portion 82 tronconique de raccordement à la portion de diamètre réduit.

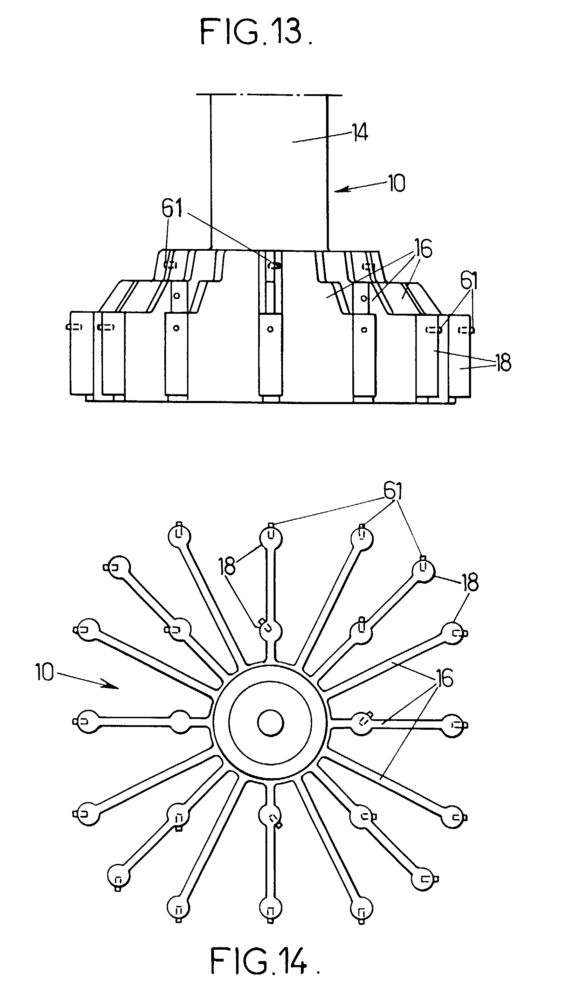

Les figures 13 et 14 montrent une répartition possible des pions ou goupilles de blocage 61 utilisées dans le mode de réalisation de la figure 10. Cette répartition permet d'accéder sans difficulté à tous les pions 61 pour les placer ou les enlever.

## Revendications

1. Grappe de commande pour réacteur nucléaire, comprenant une araignée (10) constituée d'un pommeau (14) muni de moyens d'accrochage à une tige de commande et des ailettes (16) rayonnant à partir d'une partie inférieure du pommeau et munies de doigts verticaux (18) répartis selon un réseau régulier, et des crayons munis de bouchons (26) fixés de façon démontable aux doigts, caractérisée en ce que les ailettes (16), leurs doigts (18) et au moins la partie inférieure du pommeau constituent une pièce monobloc venant de moulage ou électro-usinée.

2. Grappe selon la revendication 1, caractérisée en ce que la partie supérieure du pommeau est d'une seule pièce avec la partie inférieure et en ce que l'araignée est fabriquée par électro-érosion.

3. Grappe selon la revendication 1, caractérisée en ce que la partie supérieure du pommeau est constituée par un manchon cylindrique (14a), distinct de la partie inférieure de la pièce monobloc, emboîté dans ladite partie inférieure et raccordé à cette dernière, par une liaison filetée ou par soudage.

4. Grappe selon la revendication 2, caractérisée en ce qu'elle comporte un amortisseur ayant une douille (24) coulissant dans un alésage du pommeau et repoussée vers le bas, vers une position où elle fait saillie hors du pommeau, par un ressort (25), la dite position étant définie par une butée constituée par une rondelle (30) percée fixée dans l'alésage du pommeau.

5. Grappe selon la revendication 3, caractérisée en ce qu'elle comporte un amortisseur ayant une douille (24) coulissant dans un alésage du pommeau et repoussée vers le bas, vers une position où elle fait saillie hors du pommeau, par un ressort (25), la position en saillie de la douille étant définie par une butée constituée par un talon (34) usiné à l'extrémité inférieure du pommeau.

6. Grappe selon la revendication 4 ou 5, caractérisée en ce que le dit alésage débouche vers le bas par un trou (36) ménagé dans la douille et vers le haut par un trou ménagé dans une collerette interne du manchon sur laquelle s'appuie le ressort.

7. Grappe selon l'une quelconque des revendications précédentes, caractérisée en ce que chaque bouchon (46) comporte, entre le crayon et les moyens de fixation du crayon à un doigt, un prolongement (52) traversant un doigt correspondant (18), le dit prolongement ayant au moins une partie (54) de diamètre réduit augmentant sa flexibilité.

8. Grappe selon la revendication 7, caractérisée en ce que la partie de diamètre réduit est située entre un renflement supérieur (62) de centrage dans le doigt et un renflement inférieur de diamètre plus faible pour laisser un débattement latéral au crayon.

9. Grappe selon la revendication 8, caractérisée en ce que le renflement supérieur (62) est en appui contre un épaulement d'un alésage d'un doigt qui le reçoit.

10. Grappe selon l'une quelconque des revendications 1 à 7, caractérisée en ce que chaque bouchon (46) est fixé dans un prolongateur (52) traversant un doigt correspondant (18) et ayant une partie de section réduite (54) située entre un renflement supérieur (62) de centrage dans le doigt et un renflement inférieur (64) de diamètre plus faible pour laisser un débattement latéral au crayon.

## Patentansprüche

1. Steuerbündel für einen Kernreaktor, umfassend:
eine Spinnenanordnung (10), die aus einem Knauf (14), der mit Anbringungsmitteln für einen Steuerstab versehen ist, und Flügeln (16) gebildet ist, die in einem unteren Abschnitt des Knaufes strahlenförmig angeordnet sind und mit vertikalen Fingern (18) versehen sind, die nach einem regelmäßigen Muster verteilt sind, und Stifte, die mit Zapfen (46) versehen sind, die auf demontierbare Art und Weise an den Fingern befestigt sind, **dadurch gekennzeichnet, daß** die Flügel (16), deren Finger (18) und wenigstens der untere Abschnitt des Knaufes ein einstückiges Teil bilden, das durch Gießen oder Elektrobearbeitung hergestellt ist.

2. Bündel nach Anspruch 1, **dadurch gekennzeichnet, daß** der obere Abschnitt des Knaufes mit dem unteren Abschnitt des Knaufes ein einzelnes Stück bildet, und dadurch, daß die Spinnenanordnung durch Elektroerosion hergestellt ist.

3. Bündel nach Anspruch 1, **dadurch gekennzeichnet, daß** der obere Abschnitt des Knaufes aus einer zylinderförmigen Hülse (14a) gebildet ist, die vom unteren einstückigen Abschnitt verschieden ist, in den unteren Abschnitt eingesetzt ist und mit dem letzteren über eine Gewindeverbindung oder durch Schweißen verbunden ist.

4. Bündel nach Anspruch 2, **dadurch gekennzeichnet, daß** es einen Dämpfer umfaßt, der eine Hülse (24) aufweist, die in einer Ausnehmung des Knaufes verschiebbar ist, und nach unten durch ein Spannmittel (25) gedrückt ist, und zwar gegen eine Position, in der sie aus dem Knauf vorsteht, wobei die Position durch einen Anschlag definiert ist, der durch eine gelochte Scheibe (30) gebildet ist, die an der Ausnehmung des Knaufes befestigt ist.

5. Bündel nach Anspruch 3, **dadurch gekennzeichnet, daß** es einen Dämpfer umfaßt, der eine Hülse (24) aufweist, die in einer Ausnehmung des Knaufes verschiebbar ist, und durch ein Spannmittel (25) nach unten gedrückt ist, und zwar gegen eine Position, in der sie aus dem Knauf vorsteht, wobei die vorstehende Position der Hülse durch einen Anschlag definiert ist, der aus einem Ansatz (34) gebildet ist, der an dem unteren Ende des Knaufes gebildet ist.

6. Bündel nach Anspruch 4 oder 5, **dadurch gekennzeichnet, daß** die Ausnehmung sich nach unten durch ein Loch (36) öffnet, das in der Hülse ausgespart ist, und sich nach oben durch ein Loch öffnet, das in einem Innenkragen des Zylinders, an dem das Spannmittel anliegt, ausgespart ist.

7. Bündel nach einem der vorhergehenden Ansprüche, **dadurch gekennzeichnet, daß** jeder Zapfen (46) zwischen dem Stift und dem Befestigungsmittel des Stiftes für einen Finger eine Verlängerung (52) umfaßt, die sich durch einen entsprechenden Finger (18) erstreckt, wobei die Verlängerung wenigstens einen Abschnitt (54) mit reduziertem Durchmesser aufweist, der deren Flexibilität erhöht.

8. Bündel nach Anspruch 7, **dadurch gekennzeichnet, daß** der Abschnitt mit reduziertem Durchmesser zwischen einer oberen Zentrierverdickung (62) in dem Finger, und einer unteren Verdickung mit geringerem Durchmesser angeordnet ist, um eine seitliche Verschiebung des Stiftes zuzulassen.

9. Bündel nach Anspruch 8, **dadurch gekennzeichnet, daß** die obere Verdickung (62) gegen einen Ansatz einer Ausnehmung eines Fingers anliegt, der diese aufnimmt.

10. Bündel nach einem der Ansprüche 1 bis 7, **dadurch gekennzeichnet, daß** jeder Zapfen (46) in einer Verlängerung (52) befestigt ist, die sich durch den entsprechenden Finger (18) erstreckt und einen Abschnitt mit reduziertem Querschnitt (54) aufweist, der zwischen einer oberen Zentrierverdickung (62) in dem Finger, und einer unteren Verdickung (62) mit geringerem Durchmesser angeordnet ist, um eine seitliche Verschiebbarkeit für den Stift zuzulassen.

## Claims

1. A control cluster for a nuclear reactor, comprising a spider (10) constituted by a hub (14) fitted with means for fastening to a drive shaft and with fins (16) radiating from a bottom portion of the hub and provided with vertical fingers (18) distributed in a regular array, and rods provided with plugs (26) releasably fixed to the fingers, characterized in that the fins (16), their fingers (18), and at least the lower portion of the hub constitute a one-piece part obtained by molding or electro-machining.

2. A cluster according to claim 1, characterized in that the top portion of the hub is integral with the bottom portion and in that the spider is manufactured by electro-erosion.

3. A cluster according to claim 1, characterized in that the top portion of the hub is constituted by a cylindrical sleeve (14a) that is separate from the lower portion of the one-piece part, that is engaged in the top portion of the sheath, and that is connected thereto by a screw thread connection or by welding.

4. A cluster according to claim 2, characterized in that it includes a shock absorber having a socket (24) slidibly received in a bore of the hub and that is urged by a spring (25) downwards towards a position in which it projects from the hub, said position being defined by an abutment constituted by a pierced washer (30) fixed in the bore of the hub.

5. A cluster according to claim 3, characterized in that it includes a shock absorber having a socket (24) slidable in, a bore of the hub and urged by a spring (25) downwards towards a position in which it projects from the hub, the projecting position of the socket being defined by an abutment constituted by a lip (34) machined at the bottom end of the hub.

6. A cluster according to claim 4 or 5, characterized in that said bore opens out downwards via a hole (36) formed in the socket, and upwards via a hole formed in an internal flange of the sleeve and against which the spring bears.

7. A cluster according to any preceding claim, characterized in that each plug (46) includes, between the rod and the means for fixing the rod to a finger, an extension (52) passing through a corresponding finger (18), said extension having at least one portion (54) of smaller diameter increasing its flexibility.

8. A cluster according to claim 7, characterized in that the portion of smaller diameter is situated between a top swelling (62) for centering in the finger and a bottom swelling of smaller diameter so as to leave lateral clearance for the rod.

9. A cluster according to claim 8, characterized in that the top swelling (62) bears against a shoulder of a bore of a finger that receives it.

10. A cluster according to any one of claims 1 to 7, characterized in that each plug (46) is fixed in an extender (52) passing through a corresponding finger (18) and having a portion of smaller cross-section (54) situated between a top swelling (62) for centering in the finger and a bottom swelling (64) of smaller diameter for leaving lateral clearance to the rod.
